# EUROPÄISCHE PATENTSCHRIFT

(11) **EP 2 245 848 B1**
(45) Veröffentlichungstag und Bekanntmachung des Hinweises auf die Patenterteilung: **23.04.2014**
(21) Anmeldenummer: 08801648.0
(22) Anmeldetag: 21.08.2008
(51) Int. Cl.: H04N 5/33, H04N 5/217

(54) **WÄRMEBILDKAMERA**
THERMOGRAPHIC CAMERA
CAMÉRA THERMIQUE

(30) Priorität: 19.01.2008 DE 102008005167
(43) Veröffentlichungstag der Anmeldung: 03.11.2010
(73) Patentinhaber: Testo AG, 75853 Lenzkirch (DE)
(72) Erfinder: STRATMANN, Martin, 79117 Freiburg (DE); SCHULER, Karl, 79822 Titisee-Neustadt (DE); MESSERSCHMID, Andreas, 79848 Bonndorf-Gündelwange (DE)
(74) Vertreter: Maucher, Wolfgang
(86) Internationale Anmeldenummer: PCT/EP2008/006871
(87) Internationale Veröffentlichungsnummer: WO 2009/089852

(56) Entgegenhaltungen:
- WO-A-00/52435
- US-A- 5 861 913

## Beschreibung

Die Erfindung betrifft eine Wärmebildkamera mit wenigstens einem Infrarot-Strahlungsdetektor, beispielsweise einem thermischen Detektor oder einem Pyrodetektor, und mit wenigstens einer Verstelleinrichtung, welche zum Betrieb der Wärmebildkamera notwendige Steuer- und/oder Versorgungsspannungen erzeugt und zur Verfügung stellt. Außerdem betrifft die Erfindung ein Verfahren zum Betrieb einer Wärmebildkamera.

Wärmebildkameras sind zur Ermittlung von Temperaturprofilen von Gegenständen bekannt und werden häufig in Umgebungen wechselnder Temperatur eingesetzt. Dabei unterliegen auch die Verstelleinrichtungen der Wärmebildkamera, die verschiedene Versorgungs- und/oder Steuerspannungen zur Verfügung stellen müssen, entsprechenden Temperaturschwankungen, die durchaus bis zu 70°C betragen können. Hierdurch verursacht unterliegen auch die von der zugeordneten Elektronik erzeugten Spannungen Schwankungen.

Neben einer Offsetverschiebung und einer möglichen Beeinflussung des Detektors selbst führen diese Schwankungen der Spannungen insbesondere zu einer Steigungsänderung der sogenannten Detektorkennlinie und bewirken damit eine unerwünschte Abweichung des Messwerts über die Umgebungstemperatur. Während eine Offsetverschiebung beim sogenannten Shutter-Vorgang kompensiert werden kann, bei welchem der IR-Strahlungs-Detektor durch eine kurzfristig verschlossene Verschlussblende kalibriert wird, lässt sich die Änderung der Steigung der Detektorkennlinie bisher nur durch die Verwendung entsprechend teurer temperaturstabilisierter Bauteile gering halten.

Aus der WO 00/52435 A ist eine Wärmebildkamera mit einem Infrarot-Strahlungsdetektor bekannt, bei der eine Temperaturdrift des Strahlungs-Detektors und dessen Steuerelektronik kompensiert werden, indem der Strahlungs-Detektor in einer Kalibrierungsphase verschiedenen Temperaturen ausgesetzt wird und die Integrationszeit für jeden Bildpunkt erfasst wird. Aus der Beziehung zwischen Umgebungstemperatur und Integrationszeit des Strahlungs-Detektors wird dann eine Gleichung erstellt, die während der Erfassung eines Wärmebildes als Referenz dient.

Es ist daher die Aufgabe der vorliegenden Erfindung eine Wärmebildkamera zur Verfügung zu stellen, bei der die temperaturinduzierte Drift der Elektronik bei gleichzeitig reduzierten Bauteilkosten kompensierbar ist.

Diese Aufgabe wird gelöst durch eine Wärmebildkamera der eingangs genannten Art, an der ein Speichermittel vorgesehen ist, in welchem wenigstens eine temperaturabhängige Kennlinie abgelegt ist und dass die Wärmebildkamera eine temperaturinduzierte Drift der wenigstens einen Verstelleinrichtung anhand der Kennlinie automatisch kompensiert.

An der Wärmebildkamera bestehen verschiedene Möglichkeiten, die Detektorverstärkung auf analogem oder digitalem Wege nachzuregeln. Diese Einstellmöglichkeiten erlauben eine Kompensation der Elektronikdrift. Für die Kompensation wird in einem Abgleich die Steigung der Detektorkennlinie sowie die Temperatur der wenigstens einen Verstelleinrichtung für verschiedene Umgebungstemperaturen ermittelt und sodann durch ein mathematisches Modell beschrieben. Hieraus wird mindestens eine Kennlinie erhalten, die in der Kamera abgelegt die temperaturinduzierte Drift des Systems kompensieren kann und auf die bei der Messung zurückgegriffen wird. Auf diese Weise lässt sich beispielsweise in einem Temperaturmessbereich zwischen 0°C und 100°C der durch die Elektronikdrift verursachte Messfehleranteil auf Bruchteile eines Grades reduzieren.

Besonders genaue und fein aufgelöste Bilder werden mit einer Wärmebildkamera erhalten, bei der der Infrarot-Strahlungsdetektor durch ein Bolometer, insbesondere ein Bolometer mit einem Focal Plane Array (FPA) mit einer Mehrzahl von Einzelsensoren (Pixel), gebildet ist.

Besonders zweckmäßig lässt sich die Kompensation von Messwerten anhand einer in einem Speichermittel abgelegten Kennlinie bei einer Wärmebildkamera realisieren, bei der die Detektorverstärkung durch eine analoge Änderung der Steuerspannung, des Steuerstroms oder der Integrationszeit der Verstelleinrichtung oder digital durch eine von einem Prozessor verarbeitbare Codierung regelbar ist.

Eine genauere Kompensation der Elektronikdrift, die auch Schwankungen der Temperatur über kleinere Abstände berücksichtigt, lässt sich durch den Einsatz mehrerer Kennlinien die einzelnen Bauteilen oder Gruppen von diesen zugeordnet ist, erreichen, so dass eine vorteilhafte Ausgestaltung der Wärmebildkamera darin bestehen kann, dass das Speichermittel eine oder mehrere Kennlinien aufnimmt, die jeweils einer oder mehreren Verstelleinrichtungen zugeordnet sind.

Darüber hinaus kann es zweckmäßig sein, die Temperatur der Umgebung der Verstelleinrichtungen zum Messzeitpunkt jeweils separat zu ermitteln, weswegen bei einer zweckmäßigen Weiterbildung der Wärmebildkamera im Bereich von Verstelleinrichtungen der Kamera wenigstens ein Temperatursensor zur Ermittlung der Umgebungstemperatur der Verstelleinrichtungen, insbesondere je ein Temperatursensor für jede Verstelleinrichtung, vorgesehen ist.

Die vorstehende Aufgabe wird auch gelöst durch ein Verfahren zum Betrieb einer Wärmebildkamera, etwa einer Wärmebildkamera wie sie vorstehend beschrieben wurde. Hierzu wird die Kamera zunächst einer einmalig durchzuführenden Kalibrierung unterzogen, bei welcher die folgenden Schritte durchgeführt werden:

Die Kamera wird innerhalb einer temperaturstabilisierten Umgebung, etwa einem Wärmeschrank untergebracht, wonach bei verschiedenen Temperaturen die von den elektronischen Bauteilen zur Verfügung gestellten Steuer- und/oder Versorgungsspannungen ermittelt werden. Aus diesen Spannungen wird anhand eines mathematischen Modells eine Kennlinie ermittelt, die anschließend in einem Speichermittel der Wärmebildkamera zur Kompensation der Elektronikdrift abrufbar abgelegt wird. Während eines Messvorgangs mit der Wärmebildkamera, beispielsweise bei unterschiedlichen Temperaturen, erfolgt die Kompensation der Drift der Elektronik etwa durch Vorgabe der korrekten Steuerspannung dann anhand der Kennlinie automatisch, so dass sich die Steigung der Detektorkennlinie nicht ändert. Die erwähnte Kompensation kann dabei auch auf anderem Wege als über die Steuerspannung, nämlich analog über eine Änderung des Steuerstroms oder der Integrationszeit oder digital durch eine entsprechende von einem Prozessor verarbeitbare und in einem Chip implementierte Codierung geschehen.

Durch die vorstehend beschriebene Erfindung wird also eine Wärmebildkamera zur Verfügung gestellt, bei der unter reduzierten Beuteilkosten die temperaturinduzierte Drift der elektronischen Bauteile der Kamera minimiert bzw. kompensiert werden kann.

## Patentansprüche

1. Wärmebildkamera mit wenigstens einem Infrarot-Strahlungsdetektor und mit wenigstens einer verstelleinrichtung, welche zum Betrieb der Wärmebildkamera notwendige Steuer- und/oder Versorgungsspannungen erzeugt und zur verfügung stellt, **dadurch gekennzeichnet, dass** an der Wärmebildkamera ein Speichermittel vorgesehen ist, in welchem wenigstens eine temperaturabhängige Kennlinie abgelegt ist und dass die Wärmebildkamera eine temperaturinduzierte Drift der wenigstens einen Verstelleinrichtung anhand der Kennlinie automatisch kompensiert.

2. Wärmebildkamera nach Anspruch 1, **dadurch gekennzeichnet, dass** der Infrarot-Strahlungsdetektor durch ein Bolometer, insbesondere ein Bolometer mit einem Focal Plane Array (FPA) mit einer Mehrzahl von Einzelsensoren (Pixel), gebildet ist.

3. Wärmebildkamera nach Anspruch 1 oder 2, **dadurch gekennzeichnet, dass** die Detektorverstärkung durch eine analoge Änderung der Steuerspannung, des Steuerstroms oder der Integrationszeit der verstelleinrichtung oder digital durch eine von einem Prozessor verarbeitbare Codierung regelbar ist.

4. Wärmebildkamera nach einem der vorhergehenden Ansprüche, **dadurch gekennzeichnet, dass** das Speichermittel eine oder mehrere Kennlinien aufnimmt, die jeweils einer oder mehreren Verstelleinrichtungen zugeordnet sind.

5. Wärmebildkamera nach einem der vorhergehenden Ansprüche, **dadurch gekennzeichnet, dass** im Bereich von Verstelleinrichtungen der Kamera wenigstens ein Temperatursensor zur Ermittlung der Umgebungstemperatur/Bauteiltemperatur der verstelleinrichtungen vorgesehen ist.

6. Verfahren zum Betrieb einer Wärmebildkamer a, insbesondere einer Wärmebildkamera nach einem der vorhergehenden Ansprüche, **gekennzeichnet durch** die folgenden Verfahrensschritte:
a. Einmalige Durchführung eines Kalibrationsvorgangs, bestehend aus den Schritten:
i. Unterbringung der Wärmebildkamera in einer temperaturstabilisierten Umgebung;
ii. Ermittlung der von dem oder den Verstelleinrichtungen zur Verfügung gestellten Steuer- und/oder Versorgungsspannungen;
iii. Wiederholung von Schritt ii. bei verschiedenen Temperaturen;
iv. Ermittlung einer Kennlinie aus den unter dem oder den Schritten ii. ermittelten Spannungen;
v. Ablegen der Kennlinie in einem an der Wärmebildkamera vorgesehenen Speichermittel;
b. Durchführung einer oder mehrerer Messungen unter Kompensation der Steuer- und/oder Versorgungsspannungen anhand der in schritt a. ermittelten Kennlinie.

## Claims

1. Thermographic camera with at least one infrared radiation detector and with at least one adjustment device which generates and provides control and/or supply voltages required to operate the thermographic camera, **characterized in that** there is provided on the thermographic camera a storage means in which at least one temperature-dependent characteristic curve is stored, and **in that** the thermographic camera automatically compensates a temperature-induced drift of the at least one adjustment device with the aid of the characteristic curve.

2. Thermographic camera according to Claim 1, **characterized in that** the infrared radiation detector is formed by a bolometer, in particular a bolometer with a focal plane array (FPA) having a plurality of individual sensors (pixel).

3. Thermographic camera according to Claim 1 or 2, **characterized in that** the detector amplification can be regulated by an analogous change in the control voltage, the control current or the integration time of the adjustment device, or digitally by a coding which can be processed by a processor.

4. Thermographic camera according to one of the preceding claims, **characterized in that** the storage means accommodates one or more characteristic curves which are respectively assigned to one or more adjustment devices.

5. Thermographic camera according to one of the preceding claims, **characterized in that** at least one temperature sensor is provided in the area of adjustment devices of the camera in order to determine the ambient temperature/component temperature of the adjustment devices.

6. Method for operating a thermographic camera, in particular a thermographic camera according to one of the preceding claims, **characterized by** the following method steps:
a. Carrying out once a calibration process comprising the steps of:
i. placing the thermographic camera in a temperature-stabilized environment;
ii. determining the control and/or supply voltages provided by the adjustment device or devices;
iii. repeating step ii. at various temperatures;
iv. determining a characteristic curve from the voltages determined in the step or the steps ii. and iii.;
v. storing the characteristic curve in a storage means provided on the thermographic camera; and
b. carrying out one or more measurements with compensation of the control and/or supply voltages with the aid of the characteristic curve determined in step a.

## Revendications

1. Caméra thermique comportant au moins un détecteur de rayonnement infrarouge et au moins un dispositif de réglage qui génère et met à disposition les tensions de commande et d'alimentation nécessaires au fonctionnement de la caméra thermique, **caractérisée en ce qu'**un moyen de stockage est prévu sur la caméra thermique, dans lequel au moins une courbe caractéristique dépendante de la température est enregistrée et que la caméra thermique compense automatiquement à l'aide de la courbe caractéristique une dérive, induite par la température, dudit au moins un dispositif de réglage.

2. Caméra thermique selon la revendication 1, **caractérisée en ce que** le détecteur de rayonnement infrarouge est formé par un bolomètre, en particulier un bolomètre avec une matrice à plan focal (FPA) présentant une pluralité de capteurs individuels (pixels).

3. Caméra thermique selon la revendication 1 ou 2, **caractérisée en ce que** l'amplification du détecteur peut être régulée par une variation analogique de la tension de commande, du courant de commande ou du temps d'intégration du dispositif de réglage ou numériquement par un codage pouvant être traité par un processeur.

4. Caméra thermique selon l'une des revendications précédentes, **caractérisée en ce que** le moyen de stockage contient une ou plusieurs courbes caractéristiques qui sont associées chaque fois à un ou plusieurs dispositifs de réglage.

5. Caméra thermique selon l'une des revendications précédentes, **caractérisée en ce qu'**au moins un capteur de température pour déterminer la température ambiante/température des composants des dispositifs de réglage est prévu au voisinage des dispositifs de réglage de la caméra.

6. Procédé de fonctionnement d'une caméra thermique, en particulier d'une caméra thermique selon l'une des revendications précédentes, **caractérisé par** les étapes de procédé consistant à :
a. effectuer une fois une opération de calibrage composée des étapes consistant à :
i. placer la caméra thermique dans un environnement stabilisé en température ;
ii. déterminer les tensions de commande et/ou d'alimentation mises à disposition par le ou les dispositifs de réglage ;
iii. répéter l'étape ii. à différentes températures ;
iv. déterminer une courbe caractéristique à partir des tensions déterminées à l'étape ou aux étapes ii. ;
v. enregistrer la courbe caractéristique dans un moyen de stockage prévu sur la caméra thermique ;
b. effectuer une ou plusieurs mesures en compensant les tensions de commande et/ou d'alimentation à l'aide de la courbe caractéristique déterminée à l'étape a.
